(19) Europäisches Patentamt
European Patent Office
Office européen des brevets

(11) **EP 4 516 828 A1**

(12) **EUROPEAN PATENT APPLICATION**
published in accordance with Art. 153(4) EPC

(43) Date of publication:
05.03.2025 Bulletin 2025/10

(21) Application number: 23796045.5

(22) Date of filing: 07.04.2023

(51) International Patent Classification (IPC):
*C08G 18/00* (2006.01)     *C08G 18/08* (2006.01)
*C08G 18/40* (2006.01)     *C08G 18/44* (2006.01)
*C08G 18/48* (2006.01)     *C08G 18/72* (2006.01)
*C08G 18/73* (2006.01)     *C08G 18/75* (2006.01)
*C09D 169/00* (2006.01)    *C09D 171/00* (2006.01)
*C09D 175/06* (2006.01)    *C09D 175/08* (2006.01)
*C09J 175/06* (2006.01)    *C09J 175/08* (2006.01)
*D06N 3/14* (2006.01)

(52) Cooperative Patent Classification (CPC):
**C08G 18/00; C08G 18/08; C08G 18/40;**
**C08G 18/44; C08G 18/48; C08G 18/72;**
**C08G 18/73; C08G 18/74; C08G 18/75; C09D 5/02;**
**C09D 169/00; C09D 171/00; C09D 175/06;**
**C09D 175/08; C09J 7/30;**                    (Cont.)

(86) International application number:
**PCT/JP2023/014360**

(87) International publication number:
**WO 2023/210299 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.04.2022 JP 2022074951**

(71) Applicant: DAINICHISEIKA COLOR &
CHEMICALS MFG. CO., LTD.
Chuo-ku
Tokyo 103-8383 (JP)

(72) Inventors:
• **MUTO Kazuaki**
**Tokyo 103-8383 (JP)**
• **INO Ryohei**
**Tokyo 103-8383 (JP)**

(74) Representative: **Wächtershäuser & Hartz**
**Patentanwaltspartnerschaft mbB**
**Weinstraße 8**
**80333 München (DE)**

(54) **POLYURETHANE AQUEOUS DISPERSION, ADHESIVE, SYNTHETIC LEATHER AND PAINT**

(57) There is provided an aqueous polyurethane dispersion that makes it possible to prepare an adhesive, a paint, and the like capable of forming an adhesion layer as a cured film whose physical properties such as strength are unlikely to be changed even by a change in temperature, the aqueous polyurethane dispersion having excellent storage stability, and such an adhesive, a paint, and the like can be prepared by using the aqueous polyurethane dispersion as an additive for imparting tackiness. The aqueous polyurethane dispersion is an aqueous polyurethane dispersion containing: resin particles formed with a polyurethane having a hydroxy group at a terminal thereof; and water as a dispersion medium, wherein the polyurethane has a constituent unit derived from a polyol containing a polyether polyol; a constituent unit derived from a polyisocyanate containing an aliphatic polyisocyanate and an alicyclic polyisocyanate; and a constituent unit derived from an acidic group-containing polyol, the polyurethane has an acid value of 40 mgKOH/g or lower, the polyurethan is a reaction product obtained by reacting the polyisocyanate and the polyol in a ratio of an isocyanate group (NCO group) in the polyisocyanate to a hydroxy group (OH group) in the polyol, [NCO group/OH group (molar ratio)], of 0.5 or larger and 0.95 or smaller.

(52) Cooperative Patent Classification (CPC): (Cont.)
**C09J 175/06; C09J 175/08; D06N 3/14**

**Description**

**Technical Field**

The present invention relates to an aqueous polyurethane dispersion, an adhesive, synthetic leather, and a paint.

**Background Art**

Polyurethane-based resins are resins having excellent physical properties such as abrasion resistance, bendability, flexibility, softness, processability, adhesion, and chemical resistance, and also having excellent suitability for various processing methods. For this reason, polyurethane-based resins are widely used as: materials for synthetic leather (general term of artificial leather and synthetic leather); and binders for various coating agents, inks, paints, and the like; or as materials for films, sheets, and various shaped products, and polyurethane-based resins suitable for various applications have been proposed.

Among others, aqueous dispersions of a hydrophilic polyurethane resin that enables emulsification/dispersion in water, when dried after coating, make it possible to form a film having excellent performance, such as mechanical properties, durability, chemical resistance, and abrasion resistance. For this reason, such aqueous dispersions of a hydrophilic polyurethane resin (aqueous polyurethane dispersions) are widely used for paints, adhesives, fiber processing-and-treatment agents, paper treatment agents, inks, and the like. In the past, solvent-based liquid compositions and the like obtained by dissolving a polyurethane resin in an organic solvent have been used for these applications such as paints. However, in order to cope with environmental problems and the like, solvent-based compositions are being switched to aqueous dispersions in recent years.

Various aqueous polyurethane resin dispersion are known according to required properties. For example, there have been proposed: a dispersion of an aqueous polyurethane resin having a structure derived from a hydroxy group-containing polyamine or a hydroxy group-containing monoamine; and a coating agent composition using the same, and the like (Patent Literature 1). In addition, there have been proposed: a hydroxy functional polyurethane obtained by reacting an NCO functional prepolymer with an aminoalcohol component; and a paint, a coating material, or the like using the same (Patent Literature 2). Further, there has been proposed an aqueous paint composition containing an anionic urethane resin emulsion having an acid value of 20 to 50 mgKOH/g (Patent Literature 3).

**Citation List**

**Patent Literature**

Patent Literature 1: Japanese Patent Laid-Open No. 2020-83902
Patent Literature 2: Japanese Translation of PCT International Application Publication No. 2011-518899
Patent Literature 3: Japanese Patent Laid-Open No. 2005-330339

**Summary of Invention**

**Technical Problem**

However, the polyurethane resin dispersions and the like proposed in Patent Literatures 1 to 3 cannot necessarily be said to exhibit good storage stability because the viscosities thereof are likely to increase with time. These polyurethane resin dispersions and the like can be used as an adhesive by combining them with a curing agent. However, a cured film (adhesion layer) formed using such an adhesive has a large difference in physical properties such as strength between under a normal temperature condition and under a low temperature condition, and therefore these polyurethane resin dispersions and the like cannot necessarily be said to be suitable as a material for forming an article (for example, synthetic leather to be used in a cold district) to be exposed to changes in temperature.

In addition, the conventional polyurethane resins to be used for dispersions have been produced by reacting a polyisocyanate and a polyol in a ratio of [NCO group/OH group] of larger than 1 and then further reacting a chain extender such as an amine from the viewpoint of easiness of synthesis and the like. However, a urea bond is contained in the main chain structure of a polyurethane resin produced in such a manner, and therefore when this polyurethane resin is used for an adhesive, there is a problem that, for example, the initial tackiness (initial adhesion) is lowered, or when this polyurethane resin is used for a paint, there is a problem that, for example, the adhesion to a substrate such as PVC is deteriorated.

The present invention has been completed in view of such problems of the conventional techniques, and an object of the present invention is to provide an aqueous polyurethane dispersion that makes it possible to prepare an adhesive, a paint, and the like capable of forming an adhesion layer as a cured film whose physical properties such as strength are unlikely to be changed even by a change in temperature, and that is particularly useful as an additive for imparting tackiness to base resins in adhesives and paints, the aqueous polyurethane dispersion having excellent storage stability. Another object of the present invention is to provide an adhesive, synthetic leather, and a paint each having excellent initial tackiness, adhesion, filler dispersibility, and the like, and each using this aqueous polyurethane dispersion.

**Solution to Problem**

Specifically, according to the present invention, an aqueous polyurethane dispersion described below is provided.

[1] An aqueous polyurethane dispersion containing:

resin particles formed with a polyurethane having a hydroxy group at a terminal thereof; and
water as a dispersion medium, wherein
the polyurethane has a constituent unit derived from a polyol containing a polyether polyol; a constituent unit derived from a polyisocyanate containing an aliphatic polyisocyanate and an alicyclic polyisocyanate; and a constituent unit derived from an acidic group-containing polyol,
the polyurethane has an acid value of 40 mgKOH/g or lower,
the polyurethan is a reaction product obtained by reacting the polyisocyanate and the polyol in a ratio of an isocyanate group (NCO group) in the polyisocyanate to a hydroxy group (OH group) in the polyol, [NCO group/OH group (molar ratio)], of 0.5 or larger and 0.95 or smaller,
the polyol further contains a polycarbonate polyol, and
the mass ratio of the polyether polyol (C) to the polycarbonate polyol (D), (C) : (D), is 20:80 to 95:5.

[2] The aqueous polyurethane dispersion according to [1], wherein the molar ratio of the aliphatic polyisocyanate (A) to the alicyclic polyisocyanate (B), (A): (B), is 10:90 to 90:10.
[3] The aqueous polyurethane dispersion according to [1] or [2], wherein the mass ratio of the polyether polyol(C) to the polycarbonate polyol (D), (C):(D), is 25:75 to 90:10.
[4] The aqueous polyurethane dispersion according to any one of [1] to [3], wherein the polyurethane does not have a urea bond in the main chain skeleton.
[5] The aqueous polyurethane dispersion according to any one of [1] to [4], wherein the resin particles have a cumulative 50% particle size ($D_{50}$) of 5 to 500 nm in the particle size distribution on a volume basis.
[6] The aqueous polyurethane dispersion according to any one of [1] to [5], to be used as a tackifier.
In addition, according to the present invention, an adhesive, synthetic leather, and a paint each described below are provided.
[7] An adhesive containing:

an aqueous dispersion containing a polyurethane-based resin to be used as a base resin of the adhesive;
the aqueous polyurethane dispersion according to [6]; and
an isocyanate-based curing agent.

[8] The adhesive according to [7], wherein the content of the resin particles is 5 to 30 parts by mass based on 100 parts by mass of the polyurethane-based resin.
[9] Synthetic leather including an adhesion layer formed with the adhesive according to [7] or [8].
[10] A paint containing:

an aqueous dispersion containing a polyurethane-based resin to be used as a base resin of the paint; and
the aqueous polyurethane dispersion according to [6].

**Advantageous Effects of Invention**

The present invention can provide an aqueous polyurethane dispersion that makes it possible to prepare an adhesive, a paint, and the like capable of forming an adhesion layer as a cured film whose physical properties such as strength are unlikely to be changed even by a change in temperature, and that is particularly useful as an additive for imparting tackiness to base resins (such as, for example, a commercially available aqueous dispersion to be described later containing polyurethane resin particles) in adhesives and paints, the aqueous polyurethane dispersion having excellent storage stability. In addition, the present invention can provide an adhesive, synthetic leather, and a paint each having excellent initial tackiness, adhesion, filler dispersibility, and the like, and each using this aqueous polyurethane dispersion.

**Brief Description of Drawings**

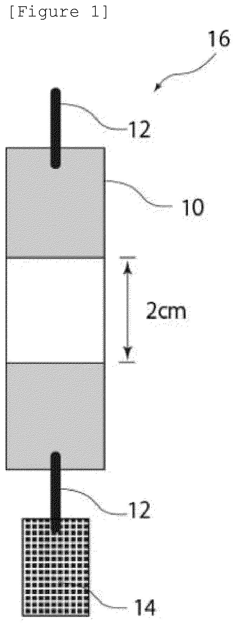

[Figure 1] Figure 1 is a schematic diagram showing a shape of samples used for an evaluation in Examples.

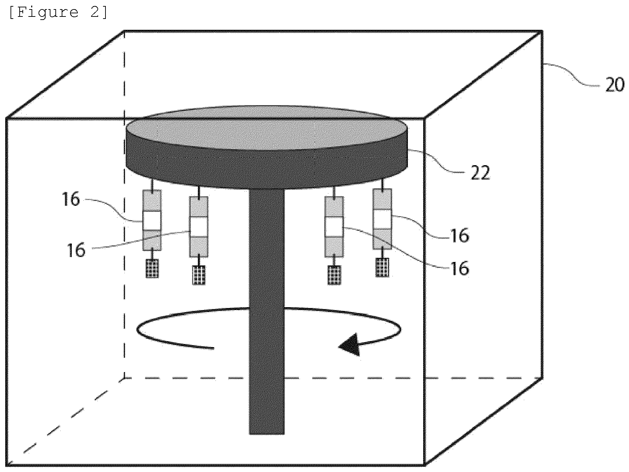

[Figure 2] Figure 2 is a schematic diagram showing the shape of a Geer oven used for an evaluation in Examples.

**Description of Embodiments**

<Aqueous Polyurethane Dispersion>

Hereinafter, embodiments of the present invention will be described, but the present invention is not limited to the following embodiments. One embodiment of an aqueous polyurethane dispersion of the present invention contains: resin particles formed with a polyurethane having a hydroxy group at a terminal thereof; and water as a dispersion medium. The polyurethane has a constituent unit derived from a polyol containing a polyether polyol; a constituent unit derived from a polyisocyanate containing an aliphatic polyisocyanate and an alicyclic polyisocyanate; and a constituent unit derived from an acidic group-containing polyol. The polyurethane has an acid value of 40 mgKOH/g or lower. The polyurethan is a reaction product obtained by reacting the polyisocyanate and the polyol in a ratio of an isocyanate group (NCO group) in the polyisocyanate to a hydroxy group (OH group) in the polyol, [NCO group/OH group (molar ratio)], of 0.5 or larger and 0.95 or smaller. Hereinafter, details on the aqueous polyurethane dispersion of the present embodiment will be described.

(Polyurethane)

The aqueous polyurethane dispersion of the present embodiment contains resin particles (polyurethane resin particles) formed with a polyurethane. That is, the aqueous polyurethane dispersion of the present embodiment is an aqueous dispersion in which the polyurethane resin particles are dispersed in an aqueous dispersion medium containing water.

[Polyol]

The polyurethane has a constituent unit derived from a polyol. The polyol is a compound having two or more hydroxy groups (OH groups) in one molecule. A polyol derived from biomass can also be used taking an environmental load and the like into consideration.
The polyol (excluding "acidic group-containing polyol" to be described later) contains a polyether polyol. The polyether polyol is a polyol having an ether bond in the molecule thereof. Examples of the polyether polyol include polyethylene glycol, polypropylene glycol, polyethylene glycol-polytetramethylene ether glycol (block or random), polytetramethylene ether glycol, and polyhexamethylene ether glycol. Among others, the polyether polyol is preferably polytetramethylene ether glycol (poly(oxytetramethylene) glycol). These polyethers can be used singly, or two or more of these polyethers can be used in combination.
The number average molecular weight of the polyether polyol is preferably 500 to 3,000, more preferably 900 to 2,100. When the number average molecular weight of the polyether polyol is too small, the softness may be somewhat deficient, and cold resistance may be insufficient. On the other hand, when the number average molecular weight of the polyether polyol is too large, the long-term heat resistance may be deteriorated.
The polyol may further contain an additional polyol other than the polyether polyol. Examples of the additional polyol include a polycarbonate polyol and a polyester polyol. Among others, a polycarbonate polyol is preferably used, that is, the polyol preferably further contains a polycarbonate polyol because it is made possible to form an adhesion layer having improved long-term heat resistance.
When the polyol contains a polyether polyol and a polycarbonate polyol, the mass ratio of the polyether polyol (C) to the polycarbonate polyol (D), (C):(D), is preferably 20:80 to 95:5, more preferably 25:75 to 90:10, particularly preferably 35:65 to 80:20. The use of the polyether polyol and the polycarbonate polyol in the above-described mass ratio makes it possible to prepare an aqueous polyurethane dispersion that enables preparation of a paint capable of forming a cured film having excellent cold-resistant bendability.
The polycarbonate polyol is preferably a polycarbonate polyol having: a structure derived from at least any one of a diol represented by the following formula (1) and a diol represented by the following formula (2); and a carbonate bond. Note that the polycarbonate polyols can be used singly, or two or more of the polycarbonate polyols can be used in combination.

$$HO-A_1-OH \qquad (1)$$

$$HO-A_2-OH \qquad (2)$$

In the formula (1), $A_1$ represents a 2-12C divalent aliphatic hydrocarbon group. The 2-12C divalent aliphatic hydrocarbon group is preferably a tetramethylene group, a pentamethylene group, or a hexamethylene group. In the formula (2), $A_2$ represents a 6-18C divalent alicyclic hydrocarbon group. The 6-18C divalent alicyclic hydrocarbon group is preferably a 1,4-cyclohexanedimethylene group.

The diol represented by formula (1) is preferably ethylene glycol, propanediol, butanediol, pentanediol, hexanediol, heptanediol, octanediol, nonanediol, decanediol, undecanediol, or dodecanediol, more preferably 2-methyl-1,3-propanediol, 1,4-butanediol, 1,5-pentanediol, or 1,6-hexanediol. These diols can be used singly, or two or more of these diols can be used in combination.

The diol represented by formula (2) is preferably 1,3-cyclohexanediol, 1,4-cyclohexanediol, or 1,4-cyclohexanedimethanol, more preferably 1,4-cyclohexanedimethanol. These diols can be used singly, or two or more of these diols can be used in combination.

Examples of the polyester polyol include: poly(ethylene adipate), dihydroxy terminated; poly(butylene adipate), dihydroxy terminated; poly(ethylene butylene adipate), dihydroxy terminated; poly(hexamethylene isophthalate adipate), dihydroxy terminated; poly(ethylene succinate), dihydroxy terminated; poly(butylene succinate), dihydroxy terminated; poly(ethylene sebacate), dihydroxy terminated; poly(butylene sebacate), dihydroxy terminated; poly-$\varepsilon$-caprolactone diol; poly(3-methyl-1,5-pentylene adipate), dihydroxy terminated; and a polycondensation product of 1,6-hexanediol and dimer acid.

[Polyisocyanate]

The polyurethane has a constituent unit derived from a polyisocyanate. The polyisocyanate is a compound having two or more isocyanate groups (NCO groups) in one molecule. The polyisocyanate contains an aliphatic polyisocyanate and an alicyclic polyisocyanate. That is, the polyurethane has both a constituent unit derived from an aliphatic polyisocyanate and a constituent unit derived from an alicyclic polyisocyanate.

The use of the alicyclic polyisocyanate makes it possible to lower the cohesion force of the polyurethane to be obtained. This makes the cohesion among the resin particles (emulsion particles) unlikely to occur and suppresses an increase in the viscosity of the aqueous polyurethane dispersion with time, so that the storage stability can be improved. However, when only the alicyclic polyisocyanate is used without using it in combination with the aliphatic polyisocyanate, a change in the physical properties of the cured film (adhesion layer) depending on the temperature is likely to occur, so that the cold resistance is deteriorated. In contrast, the use of the aliphatic polyisocyanate and the alicyclic polyisocyanate in combination makes it possible to improve the storage stability of the aqueous polyurethane dispersion and make a change in a physical property of the cured film (adhesion layer) to be formed with an adhesive using this aqueous polyurethane dispersion depending on the temperature unlikely to occur.

The aliphatic polyisocyanate (excluding the alicyclic polyisocyanate) is an isocyanate compound having a linear or branched alkyl group. Examples of the aliphatic polyisocyanate include ethylene diisocyanate, tetramethylene diisocyanate, pentamethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

The alicyclic polyisocyanate is an isocyanate compound having a cycloalkyl group. Examples of the alicyclic polyisocyanate include isophorone diisocyanate (IPDI), 4,4'-dicyclohexylmethane diisocyanate (H12-MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate.

In the polyisocyanate, the molar ratio of the aliphatic polyisocyanate (A) to the alicyclic polyisocyanate (B), (A):(B), is preferably 10:90 to 90:10, more preferably 30:70 to 70:30. When the proportion of the aliphatic polyisocyanate in the polyisocyanate is excessive, a change in a physical property of the cured film (adhesion layer) to be formed depending on the temperature is more unlikely to occur, but on the other hand, the storage stability of the aqueous polyurethane dispersion may be somewhat deteriorated.

[Acidic Group-Containing Polyol]

The polyurethane has a structural unit derived from an acidic group-containing polyol. The acidic group-containing polyol is a polyol having one or more acidic groups in one molecule. For this reason, the polyurethane is a resin having an acidic group in the molecule thereof and having an acid value within a predetermined range. Examples of the acidic group include a carboxylate group, a sulfonate group, a phosphate group, and a phenolic hydroxy group. Examples of the acidic group-containing polyol include dimethylol alkanoic acids such as 2,2-dimethylol propionic acid and 2,2-dimethylol butanoic acid, N,N-bis(hydroxyethyl) glycine, N,N-bis(hydroxyethyl) alanine, 3,4-dihydroxybutanesulfonic acid, and 3,6-dihydroxy-2-toluenesulfonic acid. Among others, from the viewpoint of easy availability, the acidic group-containing polyol is preferably a 4-12C alkanoic acid (dimethylol alkanoic acid) containing two methylol groups, more preferably 2,2-dimethylol propionic acid (2,2-bis(hydroxymethyl)propionic acid).

[Polyurethane]

The polyurethane is a reaction product that can be obtained by reacting raw material compounds containing a polyisocyanate and a polyol according to a usual method. More specifically, the polyurethane is a reaction product having a hydroxy group at a terminal thereof, the reaction product obtained by reacting the polyisocyanate and the polyol in a ratio of the isocyanate group (NCO group) in the polyisocyanate to the hydroxy group (OH group) in the polyol, [NCO group/OH group (molar ratio)], of 0.5 or larger and 0.95 or smaller, preferably 0.6 or larger and 0.9 or smaller, more preferably 0.7 or larger and 0.85 or smaller.

By allowing the value of [NCO group/OH group (molar ratio)] to fall within the above-described range, a hydroxy group can be introduced into a terminal of a polyurethane to be obtained. The use of the polyurethane having a hydroxy group at a terminal thereof makes it possible to improve the hydrophilicity of resin particles to be formed and decrease the particle size of the resin particles, and therefore makes it possible to suppress sedimentation/aggregation of the resin particles and improve the storage stability of the aqueous polyurethane dispersion. Further, the use of the polyurethane having a hydroxy group at a terminal thereof makes an adhesion layer (cured film) cured in combination with a curing agent relatively soft. For this reason, it is made possible to prepare an aqueous polyurethane dispersion that enables providing: an adhesive capable of forming an adhesion layer having improved initial tackiness; a paint capable of forming a coating film (cured film) having improved adhesion to substrates; a paint having improved ability of dispersing various matting agents (such as a filler); and the like. Note that when the value of [NCO group/OH group (molar ratio)] in reacting the polyisocyanate and the polyol is too large (for example, larger than 1.0), a hydroxy group is not present at the terminals of a polyurethane to be obtained, which deteriorates storage stability of an aqueous polyurethane dispersion.

The polyurethane that forms the resin particles preferably substantially has no urea bond (-NH-C(=O)-NH-) in the main chain skeleton. The use of the resin particles formed with the polyurethane substantially having no urea bond in the main chain skeleton makes it possible to prepare an aqueous polyurethane dispersion that enables providing: an adhesive capable of forming an adhesion layer having further improved initial tackiness; a paint capable of forming a coating film (cured film) having further improved adhesion to substrates such as PVC; and the like. In addition, the use of the aqueous polyurethane dispersion containing the resin particles formed with the polyurethane substantially having no urea bond in the main chain skeleton makes it possible to make a change in a physical property of the cured film (adhesion layer) depending on the temperature more unlikely to occur.

The acid value of the polyurethane is 40 mgKOH/g or lower, preferably 3 to 37 mgKOH/g, more preferably 5 to 35 mgKOH/g, particularly preferably 10 to 25 mgKOH/g. Note that the polyurethane has a constituent unit derived from an acidic group-containing polyol, and therefore the acid value of the polyurethane is usually higher than 0 mgKOH/g. When the acid value of the polyurethane is too high, the proportion of a hard segment is excessive. For this reason, a change in a physical property of the adhesion layer obtained by curing the polyurethane with a curing agent depending on the temperature tends to be likely to occur, and the softness and adhesion force of the adhesion layer are lowered. On the other hand, when the acid value of the polyurethane is too low, the storage stability of the aqueous polyurethane dispersion is insufficient. Note that "the acid value of the polyurethane" herein is a physical property value (calculated value) calculated by the following formula (1).

$$\text{Acid vale (mgKOH/g) of polyurethane}$$
$$= \{(W/M) \times 56110\}/Y \cdots (1)$$

W: Use amount (g) of acidic group-containing polyol
M: Molecular weight of acidic group-containing polyol
Y: Total use amount (g) of constituent materials for polyurethane

A hydroxy group is present at a terminal of the molecular chain of the polyurethane. The hydroxyl value of the polyurethane is usually 0.5 to 60 mgKOH/g, preferably 2 to 45 mgKOH/g, more preferably 10 to 35 mgKOH/g. Note that "the hydroxyl value of the polyurethane" herein is a physical property value (calculated value) calculated by the following formula (2).

$$\text{Hydroxyl value (mgKOH/g) of polyurethane}$$
$$= \{(A - B) \times 56110\}/Y \cdots (2)$$

A: Amount of substance (mol) of hydroxy groups in raw materials
B: Amount of substance (mol) of isocyanate groups in raw materials
Y: Total use amount (g) of constituent materials for polyurethane

In the formula (2), A represents the total amount of substance (mol) of hydroxy groups derived from respective raw materials (component 1, component 2, ... component n), calculated by the following formula (2a).

$$A_n = (a_n/M_n) \times F_n \cdots (2a)$$

$A_n$: Amount of substance (mol) of hydroxy group derived from component n
$a_n$: Use amount (g) of component n
$M_n$: Molecular weight of component n
$F_n$: Number of functional groups of component n

In the formula (2), B represents the total amount of substance (mol) of isocyanate groups derived from respective raw materials (component 1, component 2, ... component n), calculated by the following formula (2b).

$$B_n = (b_n/M_n) \times F_n \cdots (2b)$$

$B_n$: Amount of substance (mol) of isocyanate group derived from component n
$b_n$: Use amount (g) of component n
$M_n$: Molecular weight of component n
$F_n$: Number of functional groups of component n

In the aqueous polyurethane dispersion, the resin particles preferably have a cumulative 50% particle size ($D_{50}$) of 5 to 500 nm, more preferably 10 to 450 nm, particularly preferably 50 to 350 nm, in the particle size distribution on a volume basis. When the resin particles have a $D_{50}$ (median size) of smaller than 5 nm, the viscosity of the aqueous dispersion may excessively increase. On the other hand, the resin particles having a $D_{50}$ (median size) of larger than 500 nm may be likely to settle down.

The content of the resin particles in the aqueous polyurethane dispersion is preferably 5 to 70% by mass, more preferably 10 to 60% by mass, based on the total amount of the aqueous dispersion. When the aqueous polyurethane dispersion of the present embodiment is added to a commercially available aqueous polyurethane-based adhesive or aqueous polyurethane-based paint containing polyurethane resin particles, thereby further tackiness can be imparted to an adhesion layer or coating film (cured film) formed with the adhesive or the like. For this reason, the aqueous polyurethane dispersion of the present embodiment is useful as a tackifier to be added to an aqueous polyurethane-based adhesive or paint.

(Dispersion Medium)

The aqueous polyurethane dispersion of the present embodiment is an aqueous dispersion in which the resin particles of the polyurethane are dispersed in an aqueous dispersion medium containing water. As the water, ion-exchanged water, distilled water, pure water, ultrapure water, and the like can be used. Among others, ion-exchanged water is preferable from the viewpoint of dispersion stability of the resin particles. The aqueous dispersion medium may further contain an organic solvent within a range where the dispersibility and stability of the resin particles are not deteriorated. Examples of the organic solvent include acetone, methyl ethyl ketone, methyl isobutyl ketone, tetrahydrofuran, dioxane, dimethylformamide, dimethyl sulfoxide, N-methylpyrrolidone, N-ethylpyrrolidone, β-alkoxypropionamide, dipropylene glycol dimethyl ether, and ethyl acetate.

(Method for Producing Aqueous Polyurethane Dispersion)

The aqueous polyurethane dispersion of the present embodiment can be produced by the same methods as the conventionally known methods for producing an aqueous dispersion of resin particles composed of a polyurethane. The method for producing an aqueous polyurethane dispersion includes, for example, a step (1) of reacting a polyol, a polyisocyanate, and an acidic group-containing polyol and then neutralizing the acidic groups in with a neutralizer to form a polyurethane; and a step (2) of dispersing resin particles of the formed polyurethane in a dispersion medium containing water.

The neutralizer for neutralizing the acidic groups may appropriately be selected according to the type of the acidic groups, and the like. Examples of the neutralizer include organic amines, such as trimethylamine, triethylamine, triisopropylamine, and tributylamine; inorganic alkalis, such as sodium hydroxide and potassium hydroxide; and ammonia. Among others, the neutralizer is preferably an organic amine, more preferably triethylamine.

<Adhesive>

One embodiment of an adhesive of the present invention contains: an aqueous dispersion containing a polyurethane-based resin which is used as a base resin of the adhesive; the above-described aqueous polyurethane dispersion; and an isocyanate-based curing agent. The adhesive of the present embodiment contains the above-described aqueous polyurethane dispersion as a tackifier, and therefore the adhesive of the present embodiment is capable of forming an adhesion layer that is a cured film whose physical properties such as strength are unlikely to be changed even by a change in temperature, and the adhesive of the present embodiment has excellent initial tackiness. For this reason, the adhesive of the present embodiment is suitable as an adhesive for producing synthetic leather and various laminates.

The type of the aqueous dispersion containing a polyurethane-based resin to be as a base resin of the adhesive is not particularly limited, and for example, commercially available aqueous dispersions containing polyurethane resin particles can be used. Specific examples of the aqueous dispersion containing a polyurethane-based resin include: by trade names, Leathermin D-1063 (manufactured by Dainichiseika Color & Chemicals Mfg. Co., Ltd.); and HYDRAN WLA-408, WLA-515AR, and WLA-535 (all manufactured by DIC Corporation).

As the isocyanate-based curing agent, conventionally known isocyanate-based curing agents can be used. Examples of commercially available isocyanate-based curing agents include: by trade names, DURANATE WT30-100, DURANATE WB40-100, DURANATE WL70-100, and DURANATE WR80-70P (all manufactured by Asahi Kasei Corporation); AQUANATE 105, AQUANATE 130, AQUANATE 140, AQUANATE 200, and AQUANATE 210 (all manufactured by Tosoh Corporation); and TAKENATE WD-725, TAKENATE WD-730, and TAKENATE WD-726 (all manufactured by Mitsui Chemicals, Inc.).

The content of the isocyanate-based curing agent in the adhesive may appropriately be set according to the purpose. Specifically, the content of the isocyanate-based curing agent in the adhesive is preferably 1 to 50 parts by mass, more preferably 10 to 40 parts by mass, based on 100 parts by mass of the total amount (solid content) of the polyurethane-based resin which is used as a base resin and the resin particles (the resin particles used in the aqueous polyurethane dispersion of the present embodiment).

In addition, the content of the resin particles (the resin particles used in the aqueous polyurethane dispersion of the present embodiment) in the adhesive is preferably 5 to 30 parts by mass, more preferably 7 to 25 parts by mass, particularly preferably 10 to 20 parts by mass, based on 100 parts by mass of the polyurethane-based resin (solid content) which is used as a base resin.

In the adhesive of the present embodiment, various additives, such as a thermoplastic resin, a tackifier resin, a catalyst, a pigment, an antioxidant, an ultraviolet absorber, a surfactant, a flame retardant, a filler, and a foaming agent, can be blended in an appropriate amount as necessary.

Adherends can easily be bonded by applying the adhesive of the present embodiment on a surface of the adherend. Examples of the adherend other than the substrate layer for the above-described synthetic leather include substrates of metals or nonmetals (such as polycarbonate and glass).

<Synthetic Leather>

One embodiment of synthetic leather of the present invention includes an adhesion layer formed with the above-described adhesive. The adhesive that forms the adhesion layer contains the above-described aqueous polyurethane dispersion, and therefore the physical properties such as strength are unlikely to be changed even by a change in temperature. For this reason, the synthetic leather of the present embodiment including this adhesion layer has excellent cold resistance because the physical properties such as strength are unlikely to be changed even by a change in temperature.

The synthetic leather includes, for example, a skin layer, an adhesion layer provided on the skin layer, and a substrate layer of base cloth or the like, the substrate layer provided on the adhesion layer. Examples of the base cloth that forms the substrate layer include: fabric composed of twill weave, plane weave, or the like; napped cloth obtained by mechanically napping cotton cloth of the fabric; rayon cloth; nylon cloth; polyester cloth; Kevlar(R) cloth; nonwoven fabrics (polyester, nylon, various latexes); and various films and sheets. Examples of the skin layer include those formed with a skin layer forming paint of a solvent-based polyurethane, an aqueous polyurethane, TPU, or the like.

The synthetic leather can be produced in the following manner for example. First, a skin layer forming paint for forming a skin layer is applied on release paper by a known method such as comma coating, knife coating, roll coating, gravure coating, die coating, or spray coating. The applied paint is appropriately dried to form a skin layer, and then the above-described adhesion is applied on the formed skin layer by a known method such as comma coating, knife coating, or roll coating. The applied adhesive and a substrate layer are compression-bonded and then subjected to aging or the like under predetermined conditions. Subsequently, the release paper is released, and thus the synthetic leather as a target can be obtained. The synthetic leather of the present embodiment is suitable as a material for forming shoes, clothes, bags, furniture, interior materials for vehicles (for example, instrument panels, doors, consoles, and seats), and the like.

<Paint>

One embodiment of a paint of the present invention contains: an aqueous dispersion containing a polyurethane-based resin to be used as a base resin of the paint; and the above-described aqueous polyurethane dispersion. The paint of the present embodiment contains the above-described aqueous polyurethane dispersion as a tackifier, and therefore when the paint of the present embodiment is applied on a surface to be coated and then subjected to aging or the like as necessary, thereby a cured film (film) whose physical properties such as strength are unlikely to be changed even by a change in temperature, the cured film (film) having excellent cold resistance, can be formed. In addition, the paint of the present embodiment exhibits extremely high adhesion to surfaces to be coated (surfaces of substrates composed of PVC and the like). For these reasons, the paint of the present embodiment is useful as a coating agent for coating surfaces of various substrates to be coated.

The type of the aqueous dispersion containing a polyurethane-based resin to be used as a base resin is not particularly limited, and, for example, commercially available aqueous dispersions containing polyurethane resin particles can be used. Specific examples of the aqueous dispersions containing a polyurethane-based resin include: by trade names, Leathermin D-6065NP (manufactured by Dainichiseika Color & Chemicals Mfg. Co., Ltd.); and HYDRAN WLS-290SG, WLS-210, and WLS-213 (all manufactured by DIC Corporation).

The paint of the present embodiment can further contain a curing agent (hereinafter, also referred to as "crosslinking agent"). As the crosslinking agent, isocyanate-based crosslinking agents, carbodiimide-based crosslinking agents, oxazoline-based crosslinking agents, epoxy-based crosslinking agents, and the like can be used. When the content of the crosslinking agent in the paint is too large, a defect such as plasticization or embrittlement of the film may occur due to the unreacted crosslinking agent. For this reason, the content (in terms of solid content) of the crosslinking agent in the paint is preferably 40 parts by mass or less, more preferably 0.5 to 35 parts by mass, based on 100 parts by mass of the polyurethane resin.

The paint can further contain various additives as necessary. Examples of the additives include: matting agents; antioxidants, such as hindered phenol-based, phosphite-based, and thioether-based antioxidants; light stabilizers, such as hindered amine-based light stabilizers; ultraviolet absorbers, such as benzophenone-based and benzotriazole-based ultraviolet absorbers; stabilizers against discoloration by gas, such as hydrazine-based stabilizers; and metal deactivators.

Examples of the matting agents include resin particles, silica particles, talc, aluminum hydroxide, calcium sulfate, calcium silicate, calcium carbonate, magnesium carbonate, barium carbonate, alumina silicate, a molecular sieve, kaolin, and mica. The use of the paint containing a matting agent makes it possible to form a film such as a matte skin material.

**Examples**

Hereinafter, the present invention will specifically be described based on Examples, but the present invention is not limited to these Examples. Note that "parts" and "%" in Examples and Comparative Examples are each on a mass basis unless otherwise noted.

<Preparation of Materials>

The materials described below were prepared.

- Polyether polyol: poly(oxytetramethylene) glycol, number average molecular weight 1,000

- Polycarbonate polyol: polyhexamethylene carbonate diol, trade name "ETERNACOLL UH-100," manufactured by UBE Corporation, number average molecular weight 1,000
- HDI: hexamethylene diisocyanate
- IPDI: isophorone diisocyanate
- BisMPA: 2,2-bis(hydroxymethyl) propionic acid
- TEA: triethylamine
- MEK: methyl ethyl ketone

(Reference Example 1A)

In a reaction container equipped with a stirrer, a thermometer, a gas introducing tube, and a reflux condenser, 100 parts of the polyether polyol, 6.4 parts of BisMPA, 9.3 parts of HDI, and 12.3 parts of IPDI were placed. MEK was added thereto so as to make the solid content 30%, and the resultant mixture was dissolved uniformly and then reacted at 60°C. After the reaction was continued until the isocyanate group (NCO group) disappeared, the reaction solution was cooled to room temperature, 4.8 parts of TEA was added, and the resultant mixture was stirred. An appropriate amount of water was added to conduct emulsification, and then MEK was removed by vacuum degassing to obtain an aqueous polyurethane dispersion PUD 1 (solid content 30%) containing polyurethane resin particles. The polyurethane forming the polyurethane resin particles had an acid value of 20.0 mgKOH/g and a hydroxyl value of 31.2 mgKOH/g. In addition, the polyurethane resin particles had an average particle size ($D_{50}$) of 80 nm, as measured using a laser diffraction/scattering particle size distribution analyzer.

(Examples 2 to 10 and Comparative Examples 1 to 7)

An aqueous polyurethane dispersions PUD 2 to 17 (solid content 30%) containing polyurethane resin particles was obtained in the same manner as in Reference Example 1A, described above, except that the combinations as shown in Tables 1-1 and 1-2 were employed. In Comparative Example 6, the acidic group-containing polyol (BisMPA) was not used, and therefore a satisfactory aqueous dispersion (emulsion) was not able to be obtained. Physical properties and the like are shown in Tables 1-1 and 1-2.

<Evaluations of Aqueous Polyurethane Dispersion>

(Storage Stability)

The aqueous polyurethane dispersions were stored at 10°C for 1 month. The viscosity at 25°C of each aqueous polyurethane dispersion after the storage was measured using a B-type viscometer (#2 rotor, 30 rpm) to evaluate the storage stability according to the evaluation criteria described below. The results are shown in Tables 1-1 and 1-2.

1 (Excellent): 150 mPa·s or lower
2 (Good): higher than 150 mPa·s and 300 mPa·s or lower
3 (Normal) : higher than 300 mPa·s and 800 mPa·s or lower
4 (Allowable): higher than 800 mPa·s and 1,000 mPa·s or lower
5 (Not Allowable): higher than 1,000 mPa·s, or setting/separation occurs

Table 1-1

| | | Reference Example | Examples | | | Comparative Examples | | Examples | | Comparative Example |
|---|---|---|---|---|---|---|---|---|---|---|
| | | 1A | 2 | 3 | 4 | 1 | 2 | 5 | 6 | 3 |
| Aqueous polyurethane dispersion | | PUD1 | PUD2 | PUD3 | PUD4 | PUD5 | PUD6 | PUD7 | PUD8 | PUD9 |
| Polyol (parts) | Polyether polyol | 100 | 70 | 50 | 30 | | 50 | 50 | 50 | 50 |
| | Polycarbonate polyol | | 30 | 50 | 70 | 100 | 50 | 50 | 50 | 50 |
| Polyisocyanate (parts) | HDI | 9.3 | 9.3 | 9.3 | 9.3 | 9.3 | 18.4 | 13.0 | 5.6 | 0.0 |
| | IPDI | 12.3 | 12.3 | 12.3 | 12.3 | 12.3 | 0.0 | 7.3 | 17.2 | 24.8 |
| Acidic group-containing polyol (parts) | BisMPA | 6.4 | 6.4 | 6.4 | 6.4 | 6.4 | 6.2 | 6.3 | 6.4 | 6.5 |
| Neutralizer (parts) | TEA | 4.8 | 4.8 | 4.8 | 4.8 | 4.8 | 4.7 | 4.7 | 4.8 | 4.9 |
| Polyether polyol /polycarbonate polyol (mass ratio) | | 100/0 | 70/30 | 50/50 | 30/70 | 0/100 | 50/50 | 50/50 | 50/50 | 50/50 |
| Aliphatic polyisocyanate /alicyclic polyisocyanate (molar ratio) | | 50/50 | 50/50 | 50/50 | 50/50 | 50/50 | 100/0 | 70/30 | 30/70 | 0/100 |
| NCO group/OH group (molar ratio) | | 0.75 | 0.75 | 0.75 | 0.75 | 0.75 | 0.75 | 0.75 | 0.75 | 0.75 |
| Acid value (mgKOH/g) | | 20 | 20 | 20 | 20 | 20 | 20 | 20 | 20 | 20 |
| Hydroxyl value (mgKOH/g) | | 31.2 | 31.2 | 31.2 | 31.2 | 31.2 | 31.7 | 31.4 | 30.9 | 30.6 |
| $D_{50}$ (nm) | | 80 | 80 | 80 | 80 | 80 | 80 | 80 | 80 | 80 |
| Storage stability | | 3 | 3 | 3 | 3 | 3 | 5 | 4 | 2 | 1 |

Table 1-2

| | | Comparative Example | Examples | | Comparative Examples | | Examples | | Comparative Example |
|---|---|---|---|---|---|---|---|---|---|
| | | 4 | 7 | 8 | 5 | 6 | 9 | 10 | 7 |
| Aqueous polyurethane dispersion | | PUD10 | PUD11 | PUD12 | PUD13 | PUD14 | PUD15 | PUD16 | PUD17 |
| Polyol (parts) | Polyether polyol | 50 | 50 | 50 | 50 | 50 | 50 | 50 | 50 |
| | Polycarbonate polyol | 50 | 50 | 50 | 50 | 50 | 50 | 50 | 50 |
| Polyisocyanate (parts) | HDI | 4.8 | 7.3 | 11.3 | 14.0 | 6.3 | 7.7 | 11.2 | 16.1 |
| | IPDI | 6.4 | 9.7 | 14.9 | 18.5 | 8.3 | 10.2 | 14.7 | 21.2 |
| Acidic group-containing polyol (parts) | BisMPA | 5.8 | 6.1 | 6.6 | 6.9 | 0.0 | 2.9 | 10.3 | 20.8 |
| Neutralizer (parts) | TEA | 4.4 | 4.6 | 5.0 | 5.2 | 0.0 | 2.2 | 7.8 | 15.7 |
| Polyether polyol /polycarbonate polyol (mass ratio) | | 50/50 | 50/50 | 50/50 | 50/50 | 50/50 | 50/50 | 50/50 | 50/50 |
| Aliphatic polyisocyanate /alicyclic polyisocyanate (molar ratio) | | 50/50 | 50/50 | 50/50 | 50/50 | 50/50 | 50/50 | 50/50 | 50/50 |
| NCO group/OH group (molar ratio) | | 0.4 | 0.6 | 0.9 | 1.1 | 0.75 | 0.75 | 0.75 | 0.75 |
| Acid value (mgKOH/g) | | 20 | 20 | 20 | 20 | 0 | 10 | 30 | 50 |
| Hydroxyl value (mgKOH/g) | | 79.5 | 51.1 | 12.1 | 0.0 | 24.5 | 27.8 | 34.5 | 41.2 |
| $D_{50}$ (nm) | | 30 | 50 | 150 | 700 | >1, 000 | 300 | 50 | 10 |
| Storage stability | | 2 | 2 | 4 | 5 | 5 | 4 | 2 | 1 |

EP 4 516 828 A1

13

<Production of Adhesive and Preparation of Film>

A commercially available aqueous polyurethane dispersion (trade name "Leathermin D-1063," manufactured by Dainichiseika Color & Chemicals Mfg. Co., Ltd., solid content 45%) was prepared as a base PUD. The prepared base PUD, the produced aqueous polyurethane dispersion, and an isocyanate-based curing agent (trade name "DURANATE WT30-100," manufactured by Asahi Kasei Corporation) were mixed each in an amount shown in Tables 2-1 to 2-3, and then the resultant mixture was defoamed to obtain an adhesive. The obtained adhesive was applied on release paper and then dried at 70°C for 3 minutes and at 100°C for 1 minute. Further, the dried adhesive was subjected to aging at 50°C for 24 hours for curing, and then the release paper was removed to obtain a film having a thickness of 30 $\mu$m.

<Evaluations of Adhesive>

(Rate of Change in Physical Property)

The prepared film was cut into a width of 15 mm and a length of 60 mm to make a specimen. The strength (100% M) of the specimen was measured using a tensile tester (trade name "Autograph AGS-500NS," manufactured by SHIMADZU CORPORATION) under a condition of a tensile speed of 200 mm/min. Temperature conditions were 25°C, -10°C, and -30°C. Rate A of change in a physical property and rate B of change in a physical property were calculated using the following mathematical formulas, and the rates of changes in the physical property were evaluated according to the evaluation criteria described below. The results are shown in Tables 2-1 to 2-3.

• Rate A (%) of change in physical property = { (100%M at -10°C) / (100%M at 25°C) } $\times$ 100

• Rate B (%) of change in physical property = { (100%M at -30°C) / (100%M at 25°C) } $\times$ 100

[Evaluation Criteria for Rate A of Change in Physical Property]

    1 (Excellent): 155% or lower
    2 (Good): higher than 155% and 165% or lower
    3 (Normal): higher than 165% and 180% or lower
    4 (Allowable): higher than 180% and 200% or lower
    5 (Not Allowable): higher than 200%

[Evaluation Criteria for Rate B of Change in Physical Property]

    1 (Excellent): 170% or lower
    2 (Good): higher than 170% and 200% or lower
    3 (Normal): higher than 200% and 230% or lower
    4 (Allowable): higher than 230% and 250% or lower
    5 (Not Allowable): higher than 250%

(Long-Term Heat Resistance)

The prepared film was cut into a width of 10 cm and a length of 10 cm to make a specimen. The specimen was held at 120°C for 400 hours, and then the strength (100%M) of the specimen was measured using a tensile tester (trade name "Autograph AGS-500NS," manufactured by SHIMADZU CORPORATION) under a condition of a tensile speed of 200 mm/min. Temperature condition was 25°C. The rate of change was calculated using the following mathematical formula, and the long-term heat resistance was evaluated according to the evaluation criteria described below. The results are shown in Tables 2-1 to 2-3.

• Rate (%) of change = {(100%M after holding)/(100%M before holding)} $\times$ 100

1 (Excellent): 90% or higher
2 (Good): 80% or higher and lower than 90%
3 (Normal): 70% or higher and lower than 80%
4 (Allowable): 60% or higher and lower than 70%
5 (Not Allowable): lower than 60%

(Adhesion Force)

A urethane resin (trade name "Leathermin NE-8875-30M," manufactured by Dainichiseika Color & Chemicals Mfg. Co., Ltd.) for synthetic leather was applied on release paper and dried at 120°C to form a skin layer having a thickness of 50 um. The adhesive was applied on the formed skin layer and then dried at 70°C for 3 minutes and 100°C for 1 minute to form an adhesion layer having a thickness of 100 $\mu$m. Base cloth of a polyester mesh material was bonded to the surface of the formed adhesion layer. The release paper was released after aging at 50°C for 24 hours to obtain synthetic leather for testing. The obtained synthetic leather was cut out into a width of 2 cm to make a specimen. The skin layer/base cloth were subjected to the T-peel test using a tensile tester (trade name "Autograph AGS-500NS," manufactured by SHIMADZU CORPORATION) under conditions of 25°C and a tensile speed of 200 mm/min to evaluate the adhesion force according to the evaluation criteria described below. The results are shown in Tables 2-1 to 2-3.

1 (Excellent): 1.0 kgf/cm or more, or the material is broken
2 (Good): 0.7 kgf/cm or more and less than 1.0 kgf/cm
3 (Normal): 0.5 kgf/cm or more and less than 0.7 kgf/cm
4 (Allowable): 0.2 kgf/cm or more and less than 0.5 kgf/cm
5 (Not Allowable): less than 0.2 kgf/cm

(Initial Tackiness)

A urethane resin (trade name "Leathermin NE-8875-30M," manufactured by Dainichiseika Color & Chemicals Mfg. Co., Ltd.) for synthetic leather was applied on release paper and dried at 120°C to form a skin layer having a thickness of 50 $\mu$m. The adhesive was applied on the formed skin layer and then dried at 70°C for 3 minutes and 100°C for 1 minute to form an adhesion layer having a thickness of 100 $\mu$m. A probe tack test was conducted using a probe tack tester (trade name "TE-6001," manufactured by TESTER SANGYO CO., LTD.) in such a way that a columnar SUS rod (diameter 5 mm$\phi$) was pressed to the surface of the formed adhesion layer with a load of 20 g for 1 second and then pulled up at a moving speed of 1 cm/second. The strength (N/5 mm$\phi$) in pulling up the SUS rod was measured to evaluate the initial tackiness according to the evaluation criteria described below. The results are shown in Tables 2-1 to 2-3.

1 (Excellent): 5 N/5 mm$\phi$ or higher
2 (Good): 4 N/5 mm$\phi$ or higher and lower than 5 N/5 mm$\phi$
3 (Normal): 3 N/5 mm$\phi$ or higher and lower than 4 N/5 mm$\phi$
4 (Allowable): 2 N/5 mm$\phi$ or higher and lower than 3 N/5 mm$\phi$
5 (Not allowable): lower than 2 N/5 mm$\phi$

Table 2-1: Compositions and evaluations of adhesives

| | | Reference Example | Reference Example | Examples | | | Comparative Examples | | Examples | | Comparative Example |
|---|---|---|---|---|---|---|---|---|---|---|---|
| | | 1 | 11 | 12 | 13 | 14 | 8 | 9 | 15 | 16 | 10 |
| Base PUD (parts) | | 100 | 100 | 100 | 100 | 100 | 100 | 100 | 100 | 100 | 100 |
| Aqueous polyurethane dispersion | Type | - | PUD1 | PUD2 | PUD3 | PUD4 | PUD5 | PUD6 | PUD7 | PUD8 | PUD9 |
| | Amount (parts) | - | 10 | 10 | 10 | 10 | 10 | 10 | 10 | 10 | 10 |
| Isocyanate-based curing agent (parts) | | 10 | 10 | 10 | 10 | 10 | 10 | 10 | 10 | 10 | 10 |
| Rate A of change in physical property | | 3 | 1 | 2 | 3 | 4 | 5 | 2 | 2 | 3 | 5 |
| Rate B of change in physical property | | 3 | 1 | 2 | 3 | 4 | 5 | 2 | 3 | 4 | 5 |
| Long-term heat resistance | | 3 | 4 | 3 | 3 | 3 | 2 | 3 | 3 | 3 | 3 |
| Adhesion force | | 3 | 2 | 2 | 2 | 2 | 2 | 2 | 2 | 2 | 2 |
| Initial tackiness | | 5 | 1 | 2 | 2 | 2 | 2 | 2 | 2 | 2 | 2 |

Table 2-2: Compositions and evaluations of adhesives

| | | Comparative Example | Examples | | Comparative Examples | | Examples | | Comparative Example |
|---|---|---|---|---|---|---|---|---|---|
| | | 11 | 17 | 18 | 12 | 13 | 19 | 20 | 14 |
| Base PUD (parts) | | 100 | 100 | 100 | 100 | 100 | 100 | 100 | 100 |
| Aqueous polyurethane dispersion | Type | PUD10 | PUD11 | PUD12 | PUD13 | PUD14 | PUD15 | PUD16 | PUD17 |
| | Amount (parts) | 10 | 10 | 10 | 10 | 10 | 10 | 10 | 10 |
| Isocyanate-based curing agent (parts) | | 10 | 10 | 10 | 10 | 10 | 10 | 10 | 10 |
| Rate A of change in physical property | | 5 | 4 | 3 | 4 | 1 | 2 | 4 | 5 |
| Rate B of change in physical property | | 5 | 4 | 3 | 4 | 1 | 2 | 4 | 5 |
| Long-term heat resistance | | 3 | 3 | 3 | 3 | 3 | 3 | 3 | 3 |
| Adhesion force | | 5 | 2 | 3 | 4 | 1 | 1 | 3 | 5 |
| Initial tackiness | | 5 | 3 | 2 | 5 | 2 | 2 | 3 | 5 |

Table 2-3: Compositions and evaluations of adhesives

| | | Examples | | | |
|---|---|---|---|---|---|
| | | 21 | 22 | 23 | 24 |
| Base PUD (parts) | | 100 | 100 | 100 | 100 |
| Aqueous polyurethane dispersion | Type | PUD2 | PUD2 | PUD2 | PUD2 |
| | Amount (parts) | 1 | 5 | 20 | 40 |
| Isocyanate-based curing agent (parts) | | 10 | 10 | 10 | 10 |
| Rate A of change in physical property | | 3 | 3 | 1 | 1 |
| Rate B of change in physical property | | 3 | 3 | 1 | 1 |
| Long-term heat resistance | | 3 | 3 | 3 | 3 |
| Adhesion force | | 3 | 2 | 3 | 4 |
| Initial tackiness | | 4 | 4 | 1 | 1 |

<Production of Paint and Preparation of Test Sheet>

An aqueous polyurethane dispersion (trade name "Leathermin D-6065NP," manufactured by Dainichiseika Color & Chemicals Mfg. Co., Ltd., solid content 30%) was prepared as a base PUD. To 100 parts of the prepared base PUD, 9 parts of a matting agent (trade name "ACEMATT TS-100," manufactured by Evonik Industries AG, volume average particle size 9.5 $\mu$m) and an appropriate amount of ion-exchanged water were added and mixed to obtain an aqueous surface treatment agent (solid content 20%). Into 100 parts of the obtained surface treatment agent, the produced aqueous polyurethane dispersion was mixed in an amount shown in Tables 3-1 to 3-3 to prepare a paint. The prepared paint was coated on a PVC sheet using a bar coater. The applied paint was dried at 120°C for 1 minute using a drier to obtain a test sheet including a film having a thickness of 10 $\mu$m formed thereon.

<Evaluations of Paint>

(Adhesion to PVC)

The adhesion of the film (coating film) to PVC was evaluated using the test sheet by a cross cut method in accordance with JIS K 5600. Specifically, the test sheet in which cuts were made at intervals of 2 mm was visually observed to evaluate the adhesion of the coating film to PVC according to the evaluation criteria described below. The results are shown in Tables 3-1 to 3-3.

1 (Excellent): The edges of the cuts are completely smooth, and peeling is not recognized in all the lattices.
2 (Good): Small peeling is recognized at an intersection of the cuts.
3 (Normal): The coating film peels at an edge of the cuts or at an intersection of the cuts.
4 (Allowable): The coating film partially or wholly peels significantly along an edge of the cuts.
5 (Not allowable): The coating film wholly peels irrespective of the cuts.

(Dispersibility)

The appearance of the test sheet was visually observed and the tactile impression of the surface was checked to evaluate the dispersibility according to the evaluation criteria described below. The results are shown in Tables 3-1 to 3-3.

1 (Excellent): A white point due to the aggregation of the matting agent cannot be seen from the appearance, and coarse particles are not felt by tactile impression.
2 (Good): One to five white points can be seen in a range of 5 cm × 5 cm. Coarse particles are not felt by tactile impression.
3 (Normal): One to five white points can be seen in a range of 5 cm × 5 cm. Coarse particles are slightly felt by tactile impression.
4 (Allowable): Five to ten white points can be seen in a range of 5 cm × 5 cm. Coarse particles are clearly felt by tactile impression.
5 (Not Allowable): The coating film is white and not transparent.

(Cold-Resistant Bendability)

A specimen having a width of 50 mm and a length of 150 mm was cut out from the test sheet. A bendability test was conducted using a De Mattia tester under conditions of a bending stroke of 100 mm and -10°C to evaluate the cold-resistant bendability according to the evaluation criteria described below. The results are shown in Tables 3-1 to 3-3.

1 (Excellent): Whitening and breakage do not occur in 30,000 cycles of bending
2 (Good): Whitening or breakage occurs in 20,000 or more and less than 30,000 cycles of bending
3 (Normal): Whitening or breakage occurs in 10,000 or more and less than 20,000 cycles of bending
4 (Allowable): Whitening or breakage occurs in 5,000 or more and less than 10,000 cycles of bending
5 (Not Allowable) : Whitening or breakage occurs in less than 5,000 cycles of bending

(Thermal Discoloration Resistance)

The test sheet was subjected to aging at 80°C for 500 hours. The test sheets before and after the aging and the gray scale were compared to evaluate the thermal discoloration resistance according to the evaluation criteria described below. The results are shown in Tables 3-1 to 3-3.

1 (Excellent): Grade 5 of gray scale
2 (Good): Grade 4 of gray scale
3 (Normal): Grade 3 of gray scale
4 (Allowable): Grade 2 of gray scale
5 (Not allowable): Grade 1 of gray scale

Table 3-1: Compositions and evaluations of paints

| | | Reference Example | Reference Example | Examples | | | Comparative Examples | | Examples | | Comparative Examples |
|---|---|---|---|---|---|---|---|---|---|---|---|
| | | 1 | 25 | 26 | 27 | 28 | 15 | 16 | 29 | 30 | 17 |
| Surface treatment agent (parts) | | 100 | 100 | 100 | 100 | 100 | 100 | 100 | 100 | 100 | 100 |
| Aqueous polyurethane dispersion | Type | - | PUD1 | PUD2 | PUD3 | PUD4 | PUD5 | PUD6 | PUD7 | PUD8 | PUD9 |
| | Amount (parts) | - | 10 | 10 | 10 | 10 | 10 | 10 | 10 | 10 | 10 |
| Adhesion to PVC | | 5 | 1 | 2 | 3 | 4 | 5 | 3 | 2 | 2 | 1 |
| Dispersibility | | 5 | 1 | 2 | 3 | 3 | 4 | 3 | 3 | 3 | 3 |
| Cold-resistant bendability | | 4 | 2 | 3 | 3 | 4 | 5 | 1 | 2 | 4 | 5 |
| Thermal discoloration resistance | | 1 | 4 | 4 | 3 | 2 | 1 | 3 | 3 | 3 | 3 |

## EP 4 516 828 A1

Table 3-2: Compositions and evaluations of paints

| | | Comparative Example | Examples | | Comparative Examples | | Examples | | Comparative Example |
|---|---|---|---|---|---|---|---|---|---|
| | | 18 | 31 | 32 | 19 | 20 | 33 | 34 | 21 |
| Surface treatment agent (parts) | | 100 | 100 | 100 | 100 | 100 | 100 | 100 | 100 |
| Aqueous polyurethane dispersion | Type | PUD10 | PUD11 | PUD12 | PUD13 | PUD14 | PUD15 | PUD16 | PUD17 |
| | Amount (parts) | 10 | 10 | 10 | 10 | 10 | 10 | 10 | 10 |
| Adhesion to PVC | | 2 | 2 | 3 | 5 | 4 | 2 | 2 | 2 |
| Dispersibility | | 2 | 2 | 4 | 5 | 3 | 3 | 3 | 3 |
| Cold-resistant bendability | | 5 | 2 | 4 | 4 | 3 | 3 | 3 | 5 |
| Thermal discoloration resistance | | 5 | 3 | 3 | 2 | 3 | 3 | 3 | 3 |

Table 3-3: Compositions and evaluations of paints

| | | Examples | | | |
|---|---|---|---|---|---|
| | | 35 | 36 | 37 | 38 |
| Surface treatment agent (parts) | | 100 | 100 | 100 | 100 |
| Aqueous polyurethane dispersion | Type | PUD2 | PUD2 | PUD2 | PUD2 |
| | Amount (parts) | 1 | 5 | 20 | 40 |
| Adhesion to PVC | | 4 | 3 | 1 | 1 |
| Dispersibility | | 4 | 3 | 1 | 1 |
| Cold-resistant bendability | | 4 | 4 | 2 | 1 |
| Thermal discoloration resistance | | 2 | 2 | 4 | 4 |

**Industrial Applicability**

The aqueous polyurethane dispersion of the present invention is useful as, for example, not only a material for forming adhesive layers for various products of synthetic leather and the like; but also a coating agent, a paint, and the like that are capable of forming cured films having excellent abrasion resistance and cold-resistant bendability; and a tackifier to be added to paints, adhesives, and the like.

**Claims**

1. An aqueous polyurethane dispersion comprising:

    resin particles formed with a polyurethane having a hydroxy group at a terminal thereof; and
    water as a dispersion medium, wherein
    the polyurethane has a constituent unit derived from a polyol comprising a polyether polyol; a constituent unit derived from a polyisocyanate comprising an aliphatic polyisocyanate and an alicyclic polyisocyanate; and a constituent unit derived from an acidic group-containing polyol,
    the polyurethane has an acid value of 40 mgKOH/g or lower,
    the polyurethan is a reaction product obtained by reacting the polyisocyanate and the polyol in a ratio of an isocyanate group (NCO group) in the polyisocyanate to a hydroxy group (OH group) in the polyol, [NCO group/OH group (molar ratio)], of 0.5 or larger and 0.95 or smaller,
    the polyol further comprises a polycarbonate polyol, and

the mass ratio of the polyether polyol (C) to the polycarbonate polyol (D), (C):(D), is 20:80 to 95:5.

2. The aqueous polyurethane dispersion according to claim 1, wherein the molar ratio of the aliphatic polyisocyanate (A) to the alicyclic polyisocyanate (B), (A): (B), is 10:90 to 90:10.

3. The aqueous polyurethane dispersion according to claim 1 or 2, wherein the mass ratio of the polyether polyol(C) to the polycarbonate polyol (D), (C):(D), is 25:75 to 90:10.

4. The aqueous polyurethane dispersion according to any one of claims 1 to 3, wherein the polyurethane does not have a urea bond in the main chain skeleton.

5. The aqueous polyurethane dispersion according to any one of claims 1 to 4, wherein the resin particles have a cumulative 50% particle size ($D_{50}$) of 5 to 500 nm in the particle size distribution on a volume basis.

6. The aqueous polyurethane dispersion according to any one of claims 1 to 5, to be used as a tackifier.

7. An adhesive comprising:

    an aqueous dispersion comprising a polyurethane-based resin to be used as a base resin of the adhesive;
    the aqueous polyurethane dispersion according to claim 6; and
    an isocyanate-based curing agent.

8. The adhesive according to claim 7, wherein the content of the resin particles is 5 to 30 parts by mass based on 100 parts by mass of the polyurethane-based resin.

9. Synthetic leather comprising an adhesion layer formed with the adhesive according to claim 7 or 8.

10. A paint comprising:

    an aqueous dispersion comprising a polyurethane-based resin to be used as a base resin of the paint; and
    the aqueous polyurethane dispersion according to claim 6.

[Figure 1]

[Figure 2]

## INTERNATIONAL SEARCH REPORT

| International application No. |
| --- |
| **PCT/JP2023/014360** |

**A. CLASSIFICATION OF SUBJECT MATTER**

*C08G 18/00*(2006.01)i; *C08G 18/08*(2006.01)i; *C08G 18/40*(2006.01)i; *C08G 18/44*(2006.01)i; *C08G 18/48*(2006.01)i; *C08G 18/72*(2006.01)i; *C08G 18/73*(2006.01)i; *C08G 18/75*(2006.01)i; *C09D 169/00*(2006.01)i; *C09D 171/00*(2006.01)i; *C09D 175/06*(2006.01)i; *C09D 175/08*(2006.01)i; *C09J 175/06*(2006.01)i; *C09J 175/08*(2006.01)i; *D06N 3/14*(2006.01)i

FI: C08G18/00 C; C08G18/48; C08G18/08 019; C08G18/40 009; C08G18/44; C08G18/72 020; C08G18/73; C08G18/75; D06N3/14 101; C09J175/08; C09D175/08; C09D175/06; C09J175/06; C09D171/00; C09D169/00

According to International Patent Classification (IPC) or to both national classification and IPC

**B. FIELDS SEARCHED**

Minimum documentation searched (classification system followed by classification symbols)

C08G18/00; C08G18/08; C08G18/40; C08G18/44; C08G18/48; C08G18/72; C08G18/73; C08G18/75; C09D169/00; C09D171/00; C09D175/06; C09D175/08; C09J175/06; C09J175/08; D06N3/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-330339 A (KANSAI PAINT COMPANY, LIMITED) 02 December 2005 (2005-12-02)<br>    claims 1, 2, paragraphs [0016]-[0057], [0127], manufacturing examples 1-3, examples 1-5, table 1 | 1-10 |
| A | WO 2021/172485 A1 (SANYO CHEMICAL INDUSTRIES, LIMITED) 02 September 2021 (2021-09-02)<br>    claim 1, paragraph [0116], examples 9, 10, table 1 | 1-10 |
| A | KR 10-2009-0085805 A (HYUNDAI MOTOR COMPANY) 10 August 2009 (2009-08-10)<br>    claim 1, examples 1-3 | 1-10 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 June 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

24

## INTERNATIONAL SEARCH REPORT

International application No.

**PCT/JP2023/014360**

### C. DOCUMENTS CONSIDERED TO BE RELEVANT

| Category* | Citation of document, with indication, where appropriate, of the relevant passages | Relevant to claim No. |
|---|---|---|
| A | LEE, S. K. et al. High solid and high stability waterborne polyurethanes via ionic groups in soft segments and chain termini. Journal of Colloid and Interface Science. 2009, vol. 336, issue 1, pages 208-214, https://doi.org/10.1016/j.jcis.2009.03.028<br>particularly, 1. Introduction, 2. Experimental, 2.2. Molecular design and synthesis of waterborne polyurethanes, schemes 1., 2., 3., tables 1, 2, T3-650-30 | 1-10 |

Form PCT/ISA/210 (second sheet) (January 2015)

**INTERNATIONAL SEARCH REPORT**
Information on patent family members

International application No.

**PCT/JP2023/014360**

| Patent document cited in search report | | | Publication date (day/month/year) | Patent family member(s) | Publication date (day/month/year) |
|---|---|---|---|---|---|
| JP | 2005-330339 | A | 02 December 2005 | (Family: none) | |
| WO | 2021/172485 | A1 | 02 September 2021 | (Family: none) | |
| KR | 10-2009-0085805 | A | 10 August 2009 | (Family: none) | |

Form PCT/ISA/210 (patent family annex) (January 2015)

**REFERENCES CITED IN THE DESCRIPTION**

**Patent documents cited in the description**

- JP 2020083902 A
- JP 2011518899 W
- JP 2005330339 A